## Europäisches Patentamt
## European Patent Office
## Office européen des brevets

(19)

(11) Numéro de publication: **0 062 131**
**A1**

# DEMANDE DE BREVET EUROPEEN

(21) Numéro de dépôt: 81420051.5

(22) Date de dépôt: 07.04.81

(51) Int. Cl.³: **F 02 B 37/00, F 01 L 3/22**

(43) Date de publication de la demande: **13.10.82**
**Bulletin 82/41**

(71) Demandeur: **RENAULT VEHICULES INDUSTRIELS Société dite:, 129 Rue Servient, F-69003 Lyon (FR)**

(72) Inventeur: **Froment, Jean-Louis, 12 rue Louis Jasseron, F-69003 Lyon (FR)**
Inventeur: **Golonka, Francis, 85 rue de la République, F-69150 Decines (FR)**
Inventeur: **Pierre, Jacques, 35 rue du Professeur Pauchet, F-92420 Vaucresson (FR)**

(84) Etats contractants désignés: **AT BE CH DE FR GB IT LI LU NL SE**

(74) Mandataire: **Maisonnier, Jean, 28 rue Servient, F-69003 Lyon (FR)**

(54) **Procédé et dispositif pour améliorer les performances d'un moteur à piston suralimenté.**

(57) Procédé pour modifier les performances d'un moteur suralimenté aux bas régimes.

Le moteur (1) est équipé d'un turbo-compresseur de suralimentation (4) comprenant une turbine dont la roue (5) est entraînée par les gaz d'échappement et un compresseur dont la roue (6) comprime l'air d'admission. On utilise un montage des soupapes d'admission qui permet de réduire le temps d'admission sans changer le profil des cames, le taux de suralimentation restant compatible avec le matériel habituel.

La présente invention concerne un procédé et un dispositif pour améliorer les performances d'un moteur à piston suralimenté , par adaptation de la distribution aux caractéristiques des turbo-compresseurs à gaz d'échappement.

L'amélioration technique proposée concerne plus particulièrement , quoique non exclusivement , les moteurs thermiques pour des véhicules.

L'intérêt de la suralimentation n'est plus à prouver.Il suffit , pour s'en rendre compte , de constater le développement grandissant des turbo-compresseurs sur les véhicules industriels,et leur apparition sur les voitures particulières . Cette technique concerne aussi bien des moteurs thermiques à allumage commandé , que des moteurs à allumage par compression.

La suralimentation rencontre évidemment des limites qui correspondent à un niveau de contraintes que le moteur ne doit pas dépasser.

L'invention se fixe les objectifs suivants , tout en restant dans les limites actuelles de suralimentation , et en utilisant le matériel actuel :

- amélioration du rapport air/combustible à bas régime,et limitation de ce même rapport aux régimes élevés sur moteurs à allumage par compression ;

- augmentation du couple à bas régime , ce qui est particulièrement apprécié pour un moteur de traction ;

- abaissement éventuel du régime du couple maximum ;

- réduction de la zone de travail du compresseur en adaptant mieux la perméabilité du moteur aux caractéristiques générales des turbo-machines ;

- possibilité de suppression des clapets de recyclage ou évacuation sur moteurs à allumage commandé.

On rappelle que la perméabilité du moteur ou remplissage est le quotient entre le débit massique d'air aspiré d'une part, et le produit de la densité dans le collecteur d'admission , la cylindrée et le régime de rotation d'autre part.

L'invention concerne un moteur thermique à piston suralimenté par au moins un turbo-compresseur à gaz d'échappement et dont la distribution comprend au moins une soupape d'admission par cylindre . L'ensemble est caractérisé en ce que cette soupape comporte des moyens propres à effectuer une fermeture pneumatique , c'est-à-dire à interrompre le flux d'air admis, à un instant différent de celui où s'effectue la fermeture mécanique ( laquelle a lieu lorsque la soupape est reposée sur son siège).

Cette fermeture pneumatique s'effectue avec de l'avance, à la fermeture d'admission ( A F A ) , c'est-à-dire avant le point mort bas du piston.

Suivant une autre caractéristique de l'invention , la fermeture pneumatique de la soupape d'admission s'effectue avec une A F A comprise entre 0 degré et 60 degrés , comptée en degrés de rotation de vilebrequin.

Suivant une autre caractéristique de l'invention , on choisit l'adaptation de façon à faire travailler le turbo-compresseur dans sa zone de meilleur rendement , quel que soit le régime du moteur.

On constate que ces dispositions ont pour effet d'augmenter surtout aux bas régimes , la quantité d'air admise dans les cylindres.

Un dispositif pour la mise en oeuvre du procédé suivant l'invention est caractérisé en ce qu'on choisit un turbo-compresseur dont la turbine comporte une volute d'admission moins perméable que dans des adaptations classiques , afin d'augmenter la pression de suralimentation, et un montage des soupapes d'admission prévu de façon que l'ouverture des conduits d'admission ( ouverture pneumatique) ne se produise que si les soupapes d'admission ont effectué une certaine course à partir de leur position de repos ou d'ouverture mécanique.

Suivant une caractéristique supplémentaire de l'invention, on utilise des soupapes à écran , c'est-à-dire des soupapes comportant entre la tête et la tige , une portion cylindrique ou boisseau, susceptible de coulisser dans un alésage de la chapelle d'admission adjacent au siège.

Suivant une variante de l'invention , on utilise des soupapes à siège approfondi , c'est-à-dire dont le siège est situé à l' arrière d'un alésage dans lequel la tête de soupape coulisse .

Suivant une caractéristique supplémentaire de l'invention, la levée totale $l$ de la soupape d'admission , et la course $h$ décrite par la soupape de sa position de fermeture pneumatique à sa position de fermeture mécanique , sont dans un rapport $h/l$ compris entre 0,1 et 0,4.

Suivant une autre caractéristique de l'invention , dans le cas d'un moteur à au moins deux soupapes d'admission par cylindre, on définit chacune des soupapes selon les caractéristiques précitées, mais en outre , on peut leur conférer des caractéristiques différentes l'une de l'autre , ce qui permet de modeler la courbe du débit d'air admis dans le cylindre.

Le dessin annexé , donné à titre d'exemple non limitatif, permettra de mieux comprendre les caractéristiques de l'invention.

Figure 1 est une vue d'ensemble schématique d'un moteur équipé d'un dispositif suivant l'invention.

Figure 2 est une section II - II ( figure 1)

Figure 3 est une section montrant un premier type de montage possible pour la soupape d'admission du moteur , dessinée en position de fermeture mécanique.

Figure 4 montre la même soupape en position de fermeture pneumatique.

Figure 5 la montre en position d'ouverture complète.

Figure 6 est une section montrant un deuxième type de montage possible.

Figures 7 et 8 illustrent les positions d'ouverture complète et de fermeture pneumatique de la soupape de la figure 6 .

Figure 9 est un graphique illustrant le fonctionnement des soupapes.

Figure 10 est un graphique illustrant les caractéristiques de fonctionnement du moteur.

Figure 11 est un graphique illustrant les caractéristiques de fonctionnement du turbo-compresseur par rapport à celles du moteur.

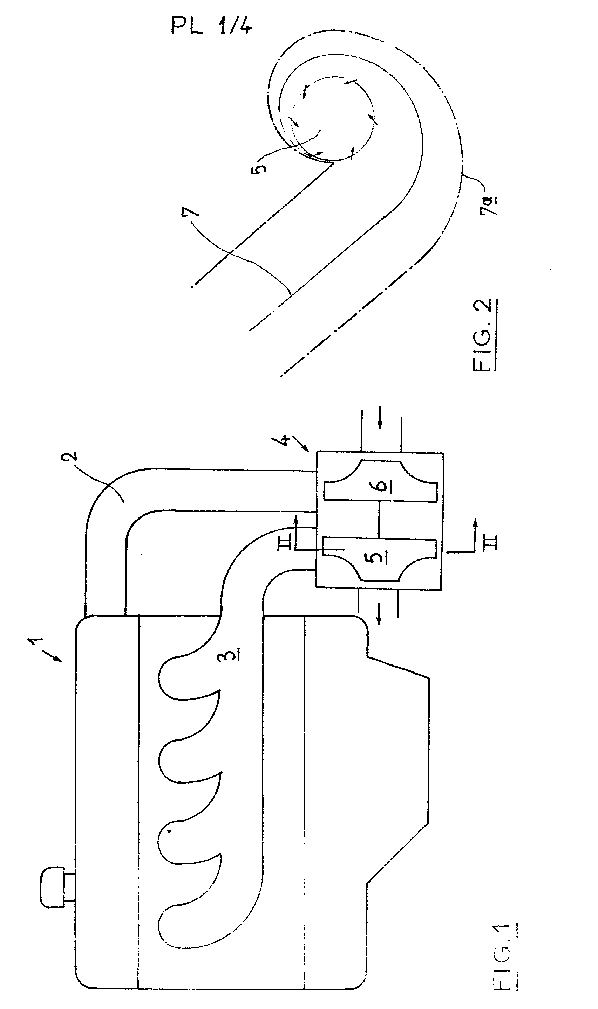

On a représenté schématiquement sur la figure 1 , un moteur 1 qui est de type classique . Ses cylindres sont alimentés en air par un collecteur d'admission 2 , et déversent les gaz de combustion dans un collecteur d'échappement 3 .

D'une manière connue , le moteur 1 est équipé d'un turbo-compresseur de suralimentation 4 comprenant une turbine dont la roue 5 est placée sur le circuit des gaz d'échappement , et un compresseur dont la roue 6 est placée sur le circuit de l'air d'admission.

Le turbo-compresseur choisi comprend un compresseur mieux adapté à la suralimentation à bas régime , et une turbine de moins grande perméabilité par rapport au turbo-compreseur normalement utilisé pour un moteur présentant les caractéristiques du moteur 1 . La perméabilité d'une turbine de turbo-compresseur se définit comme la facilité avec laquelle les gaz d'échappement peuvent traverser cette turbine .Pour disposer d'une turbine de moins grande perméabilité , on choisit par exemple une turbine dont la volute d'admission 7 présente une section plus réduite ( figure 2) . A titre indicatif , on a représenté en 7a le tracé d'une volute de turbine de turbo-compresseur normalement utilisé avec le même type de moteur.

Suivant une autre caractéristique de l'invention , les soupapes d'admission du moteur sont montées de façon à permettre simultanément :

- une ouverture pneumatique des soupapes d'admission avant ou après le point mort haut ;
- une avance de l'instant de fermeture de ces soupapes ( A F A) .

Pour cela , on prévoit deux possibilités :

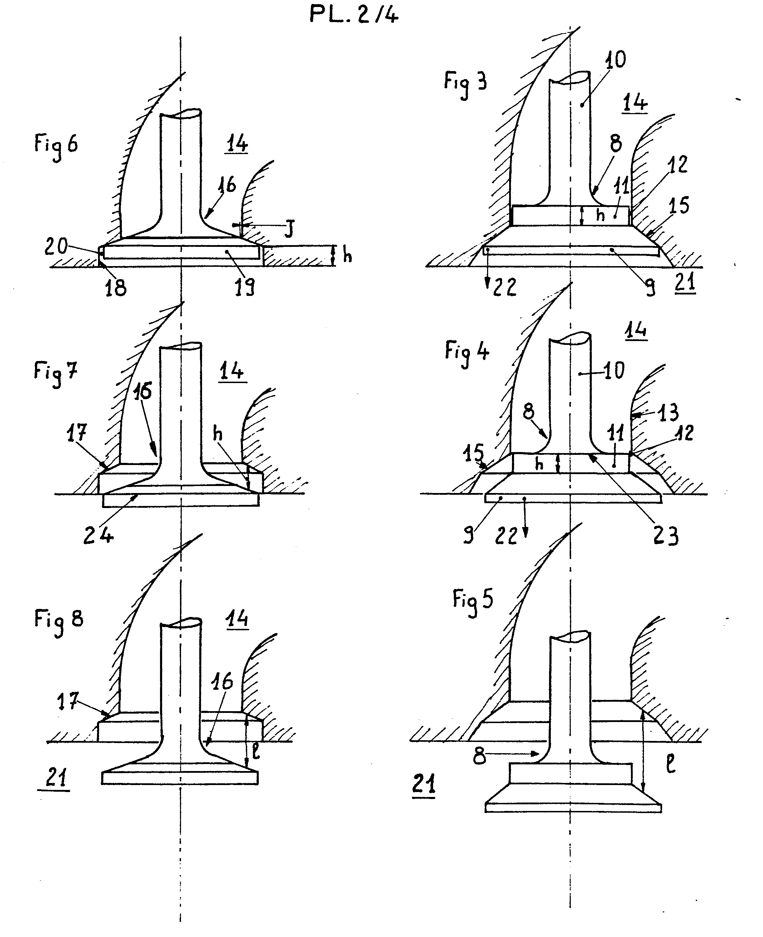

La première possibilité , illustrée sur les figures 3 , 4 et 5 , consiste à utiliser des soupapes à écran . Dans ce cas , chaque soupape d'admission 8 comporte , entre la tête 9 et la tige 10 , une portion cylindrique ou écran 11 susceptible de coulisser avec un jeu réduit 12 , dans un alésage 13 de la chapelle d'admission 14 . L'alésage 13 est adjacent au siège de la soupape tronconique 15 dans la chapelle d'admission 14.

La deuxième possibilité , illustrée sur les figures 6 , 7 et 8 , consiste à utiliser des soupapes 16 de type ordinaire , dont le siège est approfondi . Dans ce cas , chaque siège 17 d'une soupape 16 est situé à l'arrière d'un alésage 18 dans lequel la tête 19 de la soupape 16 coulisse avec un jeu radial 20 de valeur minime.

Le fonctionnement de ces soupapes est le suivant :

Lorsque la soupape 8 à écran 11 est en position de fermeture mécanique ( figure 3) , sa tête 9 est en appui sur le siège 15 . L'air de suralimentation qui emplit sous pression la chapelle 14 ne peut pas pénétrer dans le cylindre 21 du moteur.

Lorsque la came d'admission ( non représentée) commence à attaquer la soupape 8 , celle-ci amorce son décollement du siège 15 et prend un mouvement accéléré dans le sens de la flèche 22. Sa vitesse de levée croît . Toutefois , tant que l'écran 11 reste partiellement engagé dans l'alésage 13 , il se comporte comme un boisseau encore fermé , et le contenu de la chapelle 14 ne peut toujours pas pénétrer dans le cylindre 21 . La soupape 8 est mécaniquement déjà ouverte , mais pneumatiquement encore fermée.

L'ouverture pneumatique a lieu à la position illustrée sur la figure 4 , c'est-à-dire lorsque le bord arrière 23 de l'écran 11 échappe à l'alésage fixe 13 . Cette ouverture a donc lieu alors que la soupape 8 est en pleine vitesse , et qu'elle a déjà parcouru une course égale à la hauteur $h$ de l'écran 11 . A Partir de cet instant , l'air sous pression de la chapelle 14 pénètre dans le cylindre 21.

On a représenté en figure 5 , la soupape 8 à sa position d'ouverture complète ,c'est -à-dire lorsqu'elle a parcouru complètement sa course de levée d'amplitude $1$ .

Selon l'invention , on définit ainsi le rapport $h/1$ :

$$0,1 \leqslant \frac{h}{1} \leqslant 0,4$$

Dans le cas de la variante des figures 6 , 7 , 8 , la soupape 16 est de type usuel , sans écran.Par contre , son siège 17 est enfoncé dans la culasse derrière l'alésage 18 dont la profondeur est $h$ .

La position de repos ou fermeture mécanique est illustrée sur la figure 6 , la soupape 16 repose sur son siège 17.

Tant que la soupape 16 n'a pas parcouru une course au moins égale à $h$ , c'est-à-dire tant que le bord arrière 24 de sa tête cylindrique 19 n'a pas échappé à l'alésage 18 , la soupape 16 reste en position de fermeture pneumatique.

La figure 7 illustre la position d'ouverture pneumatique qui survient lorsque la soupape 16 est en pleine vitesse.Lorsque la soupape 16 est en position de pleine ouverture , elle a parcouru la totalité de sa course de levée $1$ . Ici encore , on définit $h/1$ compris entre 0,1 et 0,4.

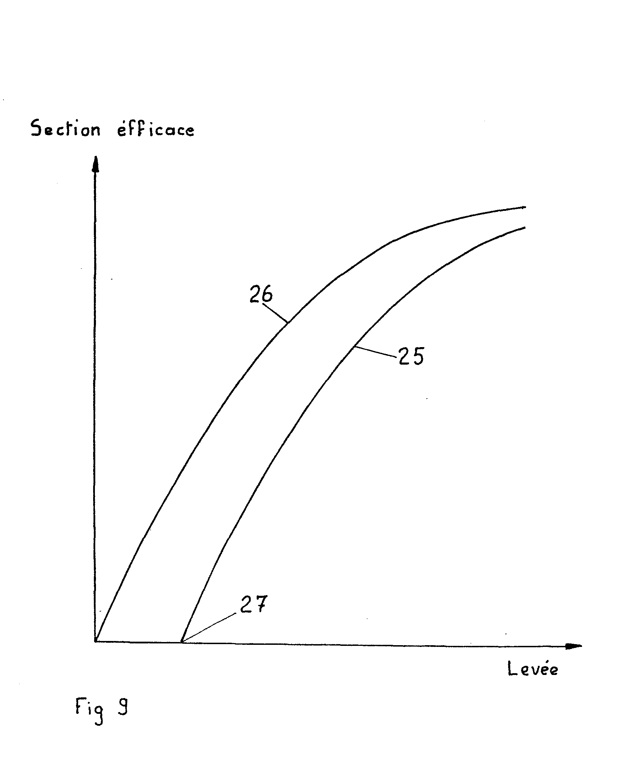

Sur la figure 9 , la courbe 25 représente les variations de la section efficace offerte au passage de l'air d'admission , en fonction de la levée d'une soupape d'admission , dans le cas des sou- papes des figures 3 à 8 . On constate que cette courbe 25 est obtenue moyennant une simple translation de la courbe 26 relative à une soupape montée de façon classique.Ainsi , du fait qu'on définisse suivant l'invention une courbe 25 translatée de la courbe 26 classique, on obtient une durée d'ouverture et une perméabilité plus faibles .

En particulier , on introduit une avance à la fermeture d'admission (A F A ) , dont la valeur , comptée en degrés d'angle au vilebrequin , est comprise entre 0° et 60°.

Cependant , pour limiter les pertes au minimum , on " recentre " l'instant d'ouverture réelle ( ouverture pneumatique) des soupapes d'admission , qui se situe au point 27 de la courbe 25 de façon que l'ouverture des soupapes d'admission intervienne près du point mort haut du moteur , pour chaque cylindre . En effet , une simulation faite sur ordinateur a montré que si l'on retarde de trop l'instant d'ouverture pneumatique , de façon que celle-ci intervienne bien après le point mort haut , il se produit dans les cylindres , une aspiration préjudiciable au paramètre connu sous le nom de " pression moyenne indiquée " . En revanche , une fermeture pneumatique avancée des soupapes d'admssion est sans inconvénient et la pression dans les cylindres est pratiquement égale à la pression dans les conduits d'admission 14 jusqu'à la fin de l'ouverture des soupapes d'admission .L'ordre de grandeur du décalage de la came est de l'ordre de 5 à 15 degrés d'angle au vilebrequin , pour des soupapes à écran munies d'une portion cylindrique 11 , de 3 à 4 mm de long ( figure 4) , ou pour des soupapes à siège approfondi dont l'alésage 18 est de 3 à 4 mm de long .

L'ouverture pneumatique effective de chaque soupape d' admission 8 ou 16 se produit alors au plut tôt au point mort haut du piston correspondant.

Les solutions décrites en rapport avec les figures 3 à 8 présentent l'avantage de ne pas nécessiter de profil spécial de came et de permettre une ouverture et une fermeture beaucoup plus franches de chaque soupape d'admission , puisque la soupape a déjà acquis une certaine vitesse au moment où elle dégage l'orifice et où le transfert commence.

Ces dispositions respectent les deux conditions suivantes :

- entraîner des modifications relativement mineures des moteurs en série ;

- entraîner un taux de suralimentation compatible avec le matériel habituel.

En effet , les dispositions décrites sont parfaitement applicables sur un moteur classique.

Pratiquement , l'une des difficultés consistait à tronquer le temps d'admission. Diverses solutions auraient pu être adoptées , dont la distribution variable , mais les dispositions conformes à l'invention évitent toute modification majeure du moteur.

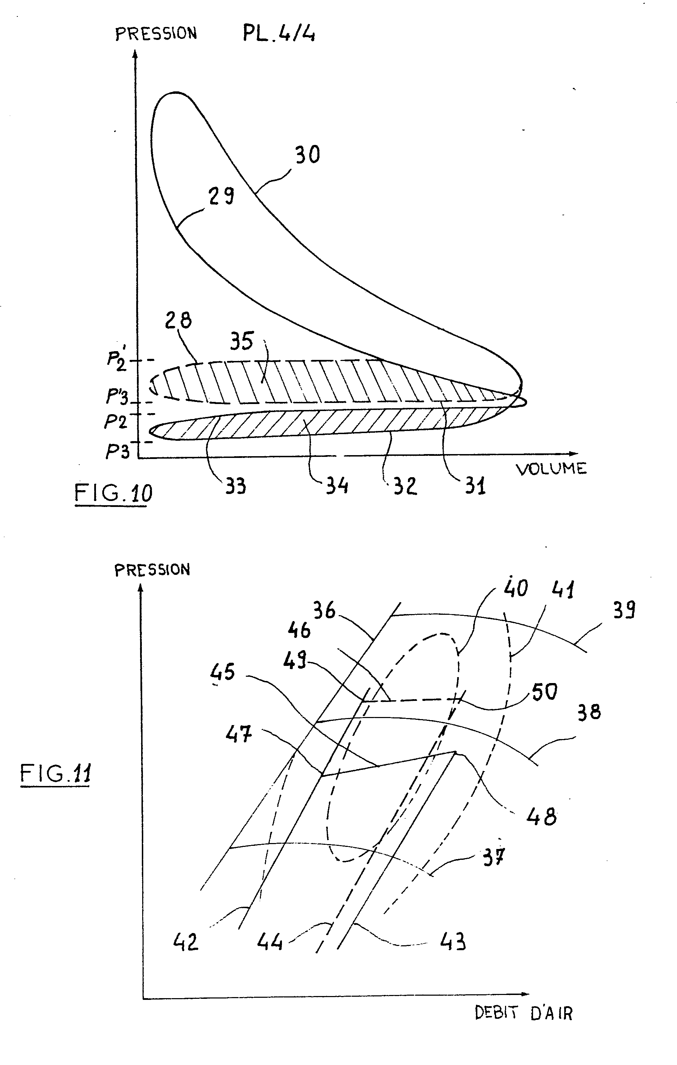

Le fonctionnement du moteur équipé du dispositif suivant l'invention est illustrédsur la figure 10 montrant un graphique où sont portés en abcisses le volume de la cylindrée et en ordonées la pression dans le cylindre . Chaque temps du moteur correspond à une portion de la courbe , à savoir :

- la portion 28 correspond à l'admission ;
- la portion 29 correspond à la compression ;
- la portion 30 correspond à la combustion ;
- la portion 31 correspond à l'échappement .

A titre comparatif , on a également tracé , dans le cas du même moteur non pourvu du dispositif suivant l'invention :

- la portion 32 correspond à l'échappement ;
- la portion 33 correspond à l'admission .

Bien entendu , les transformations conformes à l'invention restent sans effet sur les temps de compression et de combustion durant lesquels la soupape d'admission est fermée.

On peut voir le gain de travail récupéré , sachant que sur le graphique , chaque aire délimitée par une courbe est proportionnelle au travail utile ou résistant pendant un parcours de la courbe , le travail étant utile quand on parcourt la courbe dans le même sens que les aiguilles d'une montre , et étant résistant quand on parcourt la courbe en sens inverse de rotation des aiguilles d'une montre.

Dass le cas d'un moteur suralimenté , l'aire délimitée par les temps déchappement et d'admission correspond souvent à un travail utile . L'aire 34 correspondant au moteur suralimenté classique , et délimi ée entre les p tions 32 et 33 , correspond à une pression de suralimentation $P_2$ et à une pression d'échappement $P_3$. L'aire 35 , correspondant au moteur équipé suivant l'invention, implique un relèvement de la pression de suralimentation de $P_2$ en $P'_2$ et un relèvement de la pression d'échappement de $P_3$ en $P'_3$ . En effet, le relèvement de a pression d'échappement correspond au travail supplémentaire fourni par les gaz d'échappement dans le turbo-compresseur. L'expérience montre que lécart entre $P_3$ et $P'_3$ est plus faible que l'écart existant entre $P_2$ et $P'_2$ . Par conséquent , on gagne en travail utile , l'aire 35 étant plus grande que l'aire 34 .

On note que le procédé suivant l'invention permet d'obtenir ce résultat sans augmenter les contraintes dans le moteur et sans remettre en cause la structure complète du moteur utilisé comme base de travail , du fait de la diminution du temps d' admission d'air . Car , on retrouve finalement la même masse d'air dans le cylindre à un régime intermédiaire , si bien que , comme on l'a déjà signalé , la partie haute de la courbe de la figure 10 , comprenant les portions 29 et 30 , reste inchangée à la suite des modifications apportées au moteur . Autrement dit , la zone à haute pression du cycle reste la même , et on 'ne récupère du travail qu'au niveau de la zone à basse pression.

On a représenté sur la figure 11 , la carte de rendement du compresseur , avec , en abcisses , le débit d'air et en ordonnées , le rapport de pressions . Cette carte comporte les courbes suivantes :

- la courbe 36 constitue la courbe de limite de pompage du compresseur ;
- les courbes 37 , 38 et 39 correspondent chacune à une vitesse de rotation donnée de la roue du compresseur ;
- les courbes 40 et 41 sont des courbes d'isorendement du compresseur , la courbe 40 étant la courbe de rendement maximum (figuré sur la carte) ;
- les courbes 42 , 43 et 44 sont des courbes d'isovitesse du moteur . La courbe 42 , correspondant à un bas régime du moteur, reste la même après transformation du moteur conformément à l' invention. La courbe 43 correspond au régime maxi du moteur non modifié , tandis que la courbe 44 correspond au régime maxi du moteur modifié ;
- la courbe 45 est la courbe de pleine charge du moteur non modifié ;
- la courbe 46 est la courbe de pleine charge du moteur modifié conformément à l'invention.

On note que la courbe d'isorégime 43 se rapproche de la limite de pompage du compresseur en passant en 44 , tandis que les points 47 et 48 de lacourbe de pleine charge passent respectivement en 49 et 50.

En conclusion , le procédé suivant l'invention présente te principalement les avantages suivants :

- le choix du compresseur et la réduction de la durée d'admission

permettent d'accroître l'aire des basses pressions du diagramme pression / Volume ( figure 10) sans modifier l'aire des hautes pressions du même diagramme ;

- le choix de la volute de la turbine et des soupapes d'admission à écran , et la bonne adaptation traditionnelle du compresseur permettent d'obtenir une chute très rapide du remplissage des cylindres lorsqu'on se rapproche du régime maxi du moteur , tandis qu'au régime de couple maximum , la chute du remplissage est relativement faible ;

- l'augmentation du débit d'air du moteur à bas régime sans pénaliser les hautes régimes est due à la bonne adaptation du turbo-compresseur , et au fait que les soupapes à écran réduisent le remplissage à haut régime . Cela ne peut qu'être bénéfique pour la combustion . On peut donc faire travailler le compresseur plus près de sa zone de meilleur rendement ;

- à haut régime , le débit d'air peut être selon le choix , maintenu ou réduit ;

- un tel système peut permettre d'augmenter le couple maximum du moteur , pour une même puissance nominale .

Bien entendu , ce système peut être utilisé aussi bien sur un moteur Diesel que sur un moteur à allumage commandé .

## REVENDICATIONS

1 - Procédé pour améliorer les performances d'un moteurs à piston suralimenté par au moins un turbo-compresseur à gaz d'échappement et comprenant au moins une soupape d'admission , caractérisé par les mesures suivantes , prises simultanément :

- avance de l'instant de fermeture pneumatique des soupapes d'admission

- associée à une adaptation de la turbine du turbo-compresseur, de façon à augmenter la quantité d'air admise dans les cylindres seulement pour les bas régimes.

2 - Procédé suivant la revendication 1 , caractérisé en ce qu'on effectue la fermeture pneumatique de la soupape d'admission avant que le piston ne soit au point mort bas ou au plus tard , à cet instant , c'est-à-dire avec un angle d'avance à la fermeture d'admission ( A F A ) compris entre 0 et 60 degrés de vilebrequin.

3 - Procédé suivant l'une quelconque des revendications 1 et 2 , caractérisé en ce qu'on choisit d'adaptation pour faire travailler le turbo-compresseur dans sa zone de meilleur rendement quel que soit le régime du moteur.

4 - Dispositif pour la mise en oeuvre du procédé suivant l'une quelconque des revendications précédentes , caractérisé en ce qu'au moins une soupape d'admission ( 8) par cylindre comporte un écran cylindrique ( 11) coulissant à la façon d'un boisseau sur une hauteur h dans un alésage fixe (13) adjacent au siège ( 15) de la soupape.

5 - Dispositif pour la mise en oeuvre du procédé suivant l'une quelconque des revendications 1 à 3 , caractérisé en ce qu'au moins une soupape d'admission ( 16) par cylindre a son siège ( 17) situé au fond d'un alésage (18) dans lequel coulisse à la façon d'un boisseau sur une hauteur h , la tête ( 19) de la soupape .

6 - Dispositif suivant l'une quelconque des revendications 4 et 5 , où la soupape a une course totale de levée d'amplitude l , caractérisé en ce que l'ouverture pneumatique survient après que la soupape ( 8) , ( 16) , ait déjà parcouru une course de valeur h , avec :

$$0,1 \leqslant \frac{h}{l} \leqslant 0,4$$

7 - Dispositif suivant l'une quelconque des revendications 4 , 5 et 6 , utilisé sur un moteur comportant au moins deux soupapes d'admission par cylindre , et caractérisé en ce que chacune des sou-

0062131

papes d'admission est définie avec des caractéristiques $\dfrac{h}{l}$ et/ou
A F A pouvant être différentes d'une soupape à l'autre.

FIG.1

FIG. 2

Fig 6

Fig 7

Fig 8

Fig 3

Fig 4

Fig 5

0062131

PL. 3/4

Section éfficace

26

25

27

Levée

Fig 9

0062131

FIG.10

FIG.11

**Office européen des brevets**

**RAPPORT DE RECHERCHE EUROPEENNE**

0062131

Numéro de la demande

EP 81 42 0051.5

## DOCUMENTS CONSIDERES COMME PERTINENTS

| Catégorie | Citation du document avec indication, en cas de besoin, des parties pertinentes | Revendication concernée |
|---|---|---|
| X | FR - A1 - 2 461 812 (RENAULT VEHICULES INDUSTRIELS) <br> * document en entier * <br> -- | 1,3-5 |
| | FR - A - 1 214 622 (DAIMLER-BENZ) <br> * revendication 1; fig. 3 * <br> -- | 4 |
| | FR - A - 1 529 537 (INSTITUT FRANCAIS DU PETROLE, DES CARBURANTS ET LU-BRIFIANTS) <br> * page 1, colonne 2, paragraphe 1; page 3, colonne 1, paragraphe 6 à colonne 2, paragraphe 4; page 4, colonne 1, paragraphe 4 à colonne 2, paragraphe 3 ; fig. 3, 4, 6, 7 * <br> -- | 1,4,5 |
| | US - A - 4 106 466 (A. GOLOFF) <br> * revendication 1; abrégé; fig. 1 à 7 * <br> & BE - A - 857 086 <br> -- | 1,5 |
| | FR - A - 1 426 475 (LE MOTEUR MODERNE) <br> * colonne 2, paragraphes 3, 4; fig. 1,2 * <br> -- | 5 |
| A | FR - A - 1 221 910 (DAIMLER BENZ) <br> * document en entier * <br> -- | 4,5 |
| A | FR - A - 1 548 627 (S.A. DE VEHICULES INDUSTRIELS ET D'.EQUIPEMENTS MECANI-QUES SAVIEM) <br> * fig. 1, 2 * <br> ---- | |

**CLASSEMENT DE LA DEMANDE (Int. Cl.³)**

F 02 B 37/00
F 01 L 3/22

**DOMAINES TECHNIQUES RECHERCHES (Int. Cl.³)**

F 01 L 1/08
F 01 L 3/00
F 02 B 29/00
F 02 B 37/00

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| Berlin | 23-11-1981 | CANNICI |

OEB Form 1503.1 06.78